# EUROPEAN PATENT SPECIFICATION

(11) **EP 4 378 540 B1**
(45) Date of publication and mention of the grant of the patent: **11.02.2026**
(21) Application number: 23211908.1
(22) Date of filing: 24.11.2023
(51) Int. Cl.: A62C 3/16, A62C 35/10, H01M 10/655, H01M 50/211, H01M 50/264, H01M 50/271, H01M 50/505, H01M 50/548, H01M 50/55, H01M 50/609, H01M 50/682

(54) **BATTERY MODULE**
BATTERIEMODUL
MODULE DE BATTERIE

(30) Priority: 29.11.2022 CN 202211510768; 29.11.2022 CN 202223185459 U
(43) Date of publication of application: 05.06.2024
(73) Proprietor: Microvast Power Systems Co., Ltd., Huzhou Zhejiang (CN)
(72) Inventor: CHEN, Siyu, Huzhou, 313000 (CN); PAN, Shengze, Huzhou, 313000 (CN); SHEN, Mingfeng, Huzhou, 313000 (CN); LI, Bin, Huzhou, 313000 (CN); ZHONG, Cheng, Huzhou, 313000 (CN)
(74) Representative: Metida

(56) References cited:
- CN-U- 216 055 056
- CN-U- 217 641 533
- DE-A1- 102021 105 848
- US-A1- 2016 156 004

## Description

### TECHNICAL FIELD

The present invention relates to a battery module.

### DESCRIPTION OF RELATED ART

With the development of electronic technology, lithium-ion batteries have been widely used due to their advantages of high specific power, long cycle life, good safety performance, and free of pollution, etc. Thermal runaway is an important concern in the design of lithium-ion batteries. When the battery experiences thermal runaway, it can cause high temperature, smoke, fire, and even explosion in a short period of time, which is extremely dangerous.

Chinese patent publication No. CN112201884A discloses an automatic fire extinguishing battery module and battery pack, which includes multiple battery units, a heat dissipation device connected to the battery unit, and a pipe connected to the heat dissipation device, wherein the pipe is prone to combustion and damage, and a cooling liquid for fire extinguishing is circulated in the pipe. The drawback of this method is that the pipe used for fire extinguishing is suspended outside the battery housing used to accommodate the multiple battery units. The pipe lacks protection and is prone to compression and damage. Additionally, the pipe requires additional space, increasing the external size of the battery module and making the structure of the battery module not compact enough.

Chinese patent publication No. CN110797476A discloses an automatic fire extinguishing battery module, which includes frames and battery cells installed within the frames. Each frame is provided with a storage space for storing fire extinguishing agent. The advantage of this method is that a random number of frames can flexibly form a battery module, and the fire extinguishing agent is set inside the frame, which has a compact structure and can protect the fire extinguishing agent. However, the disadvantage of this method is that each storage space is independent of each other, requiring fire extinguishing agents to be stored separately in each storage space, which is cumbersome to operate.

DE102021105848A1 also discloses a battery module according to the state of the art. The battery module includes a cell unit including a plurality of secondary battery cells, a body frame member integrally combining a plurality of the cell units, a front cover, and a cover member. The cover member includes a plurality of through-holes. The through-hole may be used as a passage through which flame or gas is discharged externally of the battery module when a flame is generated in the secondary battery cell. Accordingly, a flame may pass through the through-hole and may be formed towards the flame passage. The through-hole may also provide a function of guiding the flame to the flame passage.

In view of above, it is necessary to design a battery module that is compact in structure, easy to assemble, and can extinguish fire automatically.

### SUMMARY

In view of above, the object of the present application is to provide a battery module, which is not only compact in structure and easy to assemble, but also can extinguish fire automatically and has high fire extinguishing efficiency.

The present application provides a battery module according to claim 1.

In an achievable embodiment, the fire extinguishing slot is arranged on an outer wall of the battery cell frame.

According to the invention, a first fire extinguishing material is provided inside the fire extinguishing member, when a temperature of the fire extinguishing member reaches its melting point, the fire extinguishing member bursts so as to release the first fire extinguishing material inside the fire extinguishing member.

In an achievable embodiment, the battery cell is provided with a tab, and the fire extinguishing slot is arranged on one side of the battery cell frame where the tab of the battery cell is located.

In an achievable embodiment, the battery cell frame includes a cover plate, the cover plate is arranged on the side of the battery cell frame where the tab of the battery cell is located, and the fire extinguishing slot is provided on the cover plate.

In an achievable embodiment, the cover plate is provided with a through hole for the tab of the battery cell to pass out.

In an achievable embodiment, the battery cell is provided with two tabs located on the same side, and the two tabs are spaced apart from each other; the cover plate is arranged on the side of the battery cell frame where the tabs of the battery cell are located, and there are two through holes on the cover plate, the two through holes correspond to the two tabs, respectively, and the fire extinguishing slot is arranged between the two through holes, and/or the fire extinguishing slot is arranged on an outer side of the two through holes (that is, the fire extinguishing slot is not arranged between the two through holes, in other words, in the length direction of the cover plate, the fire extinguishing slot is arranged on one or both sides of the two through holes).

In an achievable embodiment, the battery cell frame further includes a thermal conductive frame connected to the cover plate, the thermal conductive frame is located at one side of the cover plate and is provided with an installation groove, and the battery cell is installed in the installation groove.

In an achievable embodiment, the thermal conductive frame is provided with a first strap installation slot for installing a strap.

In an achievable embodiment, the thermal conductive frame is provided with a first step portion, the first step portion is formed by recessing an outer wall of the thermal conductive frame. The first strap installation slot is provided on the outer wall of the thermal conductive frame, and the position of the first strap installation slot corresponds to the position of the first step portion.

In an achievable embodiment, the battery cell is provided with two tabs located on opposite sides, the battery cell frame includes two cover plates, the two cover plates are respectively arranged on the opposite sides of the battery cell, and the two cover plates correspond to the two tabs of the battery cell, respectively, wherein each cover plate is provided with one through hole, and the fire extinguishing slot is arranged on one side or opposite two sides of the through hole.

In an achievable embodiment, the battery module further includes a busbar, the busbar is arranged on one side of the cover plate away from the battery cell, and the busbar is provided with a slit for the tab of the battery cell to pass out, the tab of the battery cell passes through the through hole and the slit in sequence and is electrically connected to the busbar.

In an achievable embodiment, a second strap installation slot for installing the strap is provided on a bottom wall of the fire extinguishing slot.

In an achievable embodiment, the battery cell frame is provided with a guiding hole at a position corresponding to the fire extinguishing slot, and heat generated by the battery cell after thermal runaway enters into the fire extinguishing slot via the guiding hole.

In an achievable embodiment, the second strap installation slot is formed by recessing the bottom wall of the fire extinguishing slot, the non-recessed part of the bottom wall of the fire extinguishing slot forms a second step portion, and the guiding hole is provided on the second step portion.

In an achievable embodiment, the fire extinguishing member is arranged along the second strap installation slot, and the fire extinguishing member does not fully cover the guiding hole.

In an achievable embodiment, multiple battery cells are installed in at least some of the battery cell frames, and the multiple battery cells are arranged sequentially within the battery cell frame. A heat insulation pad and a tab edge sealing isolation strip are provided between adjacent two battery cells in the battery cell frame, and the tab edge sealing isolation strip is arranged corresponding to the position of the tab of the battery cell.

In an achievable embodiment, a second fire extinguishing material is provided inside the tab edge sealing isolation strip. When the temperature of the tab edge sealing isolation strip reaches its melting point, the tab edge sealing isolation strip bursts so as to release the second fire extinguishing material inside the tab edge sealing isolation strip.

In an achievable embodiment, the battery cell frame is provided with positioning pins and positioning holes on opposite sides along the length direction of the battery module. As for adjacent two battery cell frames, the positioning pins on one battery cell frame can be inserted into the positioning holes on the other battery cell frame to achieve connection between the adjacent two battery cell frames.

In an achievable embodiment, the battery module further includes a protective plate, the protective plate is arranged on one side of the battery cell assembly where the fire extinguishing member is located; the protective plate is provided with an opening at a position corresponding to the fire extinguishing member.

In an achievable embodiment, the fire extinguishing member is an elongated strip structure, and the fire extinguishing member extends from one end of the fire extinguishing channel to the opposite end of the fire extinguishing channel.

In an achievable embodiment, the battery module further includes end plates and a strap. The end plates are arranged at opposite ends of the battery cell assembly along the length direction L of the battery module. The strap is arranged around the battery cell assembly and the end plates, and the strap binds the battery cell assembly and the end plates together.

The battery module in the embodiments of the present application is provided with a fire extinguishing slot on the battery cell frame, and the fire extinguishing slots on multiple battery cell frames are communicated to each other to form a fire extinguishing channel. A fire extinguishing member is arranged in the fire extinguishing channel, thereby reducing the impact of the installation of the fire extinguishing member on the external size of the battery module and improving the structural compactness of the battery module. Also, the installation of the fire extinguishing member in the fire extinguishing channel can protect the fire extinguishing member from being compressed and damaged. Further, since the fire extinguishing channel is composed of a plurality of fire extinguishing slots communicated to each other on the battery cell frames, when a battery cell in one position of the battery cell assembly catches fire, the fire extinguishing member can respond in a timely manner to extinguish the fire. That is, the fire extinguishing range of the fire extinguishing member can cover the entire battery cell assembly, so the utilization rate of the fire extinguishing member is high and the fire extinguishing efficiency is high. Moreover, during assembly, only the fire extinguishing member needs to be arranged in the fire extinguishing channel at one time, without the need to provide the fire extinguishing member for each battery cell frame separately and individually, and further, since the fire extinguishing member extends along the length direction of the battery module in the fire extinguishing channel, the number of the fire extinguishing member is reduced, thereby greatly improving the assembly efficiency of the battery module. Thus, the battery module is not only compact in structure and easy to assemble, but also can extinguish fire automatically and has high fire extinguishing efficiency.

### BRIEF DESCRIPTION OF THE DRAWINGS

FIG. 1 is a schematic diagram of the three-dimensional structure of the battery module in the embodiment of the present application.
FIG. 2 is a schematic diagram of the exploded structure of FIG. 1.
FIG. 3 is a schematic diagram of the exploded structure of the battery cell assembly in FIG. 2.
FIG. 4 is a schematic diagram of the assembly structure of the battery cell and battery cell frame in FIG. 3.
FIG. 5 is a schematic diagram of the exploded structure of FIG. 4.
FIG. 6 is a schematic diagram of the structure of the battery cell frame in FIG. 5.
FIG. 7 is a schematic diagram of the exploded structure of FIG. 6.
FIG. 8 is a schematic diagram of the structure of the other side of the cover plate in FIG. 7.
FIG. 9 is a schematic diagram of the connection structure between the tabs of the battery cell and the busbar in the embodiment of the present application.
FIG. 10 is a schematic diagram of the structure of the busbar in FIG. 9.
FIG. 11 is a schematic diagram of the structure of the busbar in another embodiment of the present application.
FIG. 12 is a schematic diagram of the structure of the busbar in another embodiment of the present application.

### DETAILED DESCRIPTION OF THE EMBODIMENTS

The following will provide a further detailed description of the specific embodiments of the present application in conjunction with the accompanying drawings and embodiments. The following embodiments are used to illustrate the invention, however, the scope of the invention is defined by the appended claims.

The terms "first", "second", "third", "fourth", etc. (if any) in the specification and claims of the present application are used to distinguish similar objects, without necessarily describing a specific sequence or order.

The terms "up", "down", "left", "right", "front", "back", "top", "bottom" (if any) mentioned in the specification and claims of the present application are defined based on the position of the structure in the figures and the position between the structures in the figures, only for the clarity and convenience of expressing the technical solution. It should be understood that the use of the directional words should not limit the protection scope of the present application.

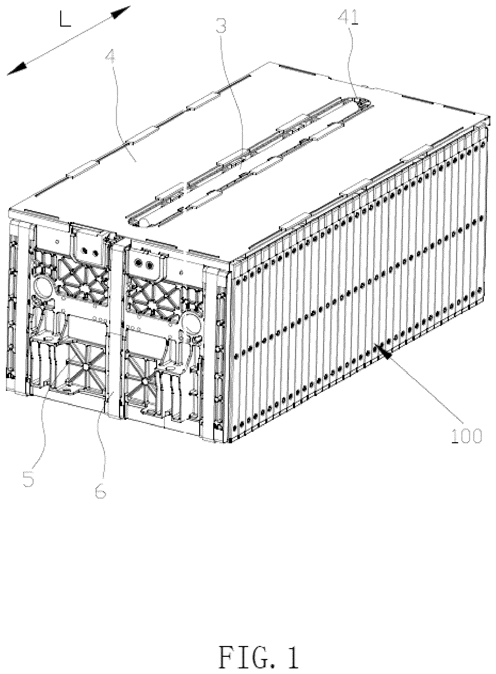

As shown in FIGS. 1 to 8, the battery module provided in the embodiment of the present application includes a battery cell assembly 100 and a fire extinguishing member 3. The battery cell assembly 100 includes a plurality of battery cell frames 1 and a plurality of battery cells 2. The plurality of the battery cell frames 1 are arranged sequentially along a length direction L of the battery module. At least one battery cell 2 is provided in at least some of the battery cell frames 1 (that is, one or more battery cells 2 are provided in each of the battery cell frames 1, or no battery cell 2 is provided in some of the battery cell frames 1). Each battery cell frame 1 is provided with a fire extinguishing slot 111, and the positions of the fire extinguishing slots 111 on the battery cell frames 1 correspond to each other (that is, the fire extinguishing slots 111 on the plurality of the battery cell frames 1 are located at the same position on the battery cell frames 1). The fire extinguishing slots 111 located at the same position on the battery cell frames 1 are communicated to each other to form a fire extinguishing channel 110. The fire extinguishing member 3 is arranged in the fire extinguishing channel 110.

Specifically, the battery module in this embodiment is provided with a fire extinguishing slot 111 on the battery cell frame 1, and the fire extinguishing slots 111 located at the same position on the battery cell frames 1 are communicated to each other to form a fire extinguishing channel 110. The fire extinguishing member 3 is arranged in the fire extinguishing channel 110, thereby reducing the impact of the installation of the fire extinguishing member 3 on the external size of the battery module and improving the structural compactness of the battery module. Also, the installation of the fire extinguishing member 3 in the fire extinguishing channel 110 can protect the fire extinguishing member 3 from being compressed and damaged. Further, since the fire extinguishing channel 110 is composed of a plurality of fire extinguishing slots 111 communicated to each other on the battery cell frames 1, when a battery cell 2 in one position of the battery cell assembly 100 catches fire, the fire extinguishing member 3 in the fire extinguishing channel 110 can respond in a timely manner to extinguish the fire. That is, the fire extinguishing range of the fire extinguishing member 3 in the fire extinguishing channel 110 can cover the entire battery cell assembly 100, so the utilization rate of the fire extinguishing member 3 is high and the fire extinguishing efficiency is high. Moreover, during assembly, the fire extinguishing member 3 only needs to be arranged in the fire extinguishing channel 110 at one time, without the need to provide the fire extinguishing member 3 for each battery cell frame 1 separately and individually, which is conducive to improving the assembly efficiency of the battery module. Thus, the battery module is not only compact in structure and easy to assemble, but also has high fire extinguishing efficiency.

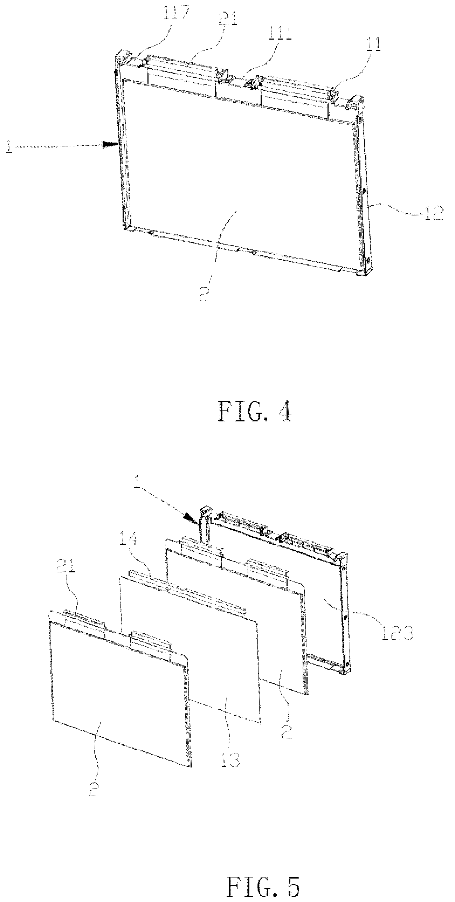

As shown in FIG. 4, in one embodiment, the fire extinguishing slot 111 is provided on the outer wall of the battery cell frame 1.

As shown in FIGS. 1, 2, and 4, in one embodiment, the fire extinguishing slot 111 extends along the length direction L of the battery module, and the fire extinguishing slot 111 extends through the battery cell frame 1. The fire extinguishing channel 110 extends along the length direction L of the battery module. The fire extinguishing member 3 is an elongated strip structure, and the fire extinguishing member 3 extends along the length direction L of the battery module in the fire extinguishing channel 110. The fire extinguishing member 3 extends from one end of the fire extinguishing channel 110 to the opposite end of the fire extinguishing channel 110, that is, the fire extinguishing member 3 is a single elongated strip structure. However, in other embodiments, a plurality of fire extinguishing members 3 can be connected to each other and installed in the fire extinguishing channel 110. The fire extinguishing member 3 can be fixed in the fire extinguishing channel 110 through bonding or bundling.

According to the invention, a first fire extinguishing material is provided inside the fire extinguishing member 3. When the temperature of the fire extinguishing member 3 reaches its melting point, the fire extinguishing member 3 can burst so as to release the first fire extinguishing material inside the fire extinguishing member 3. Specifically, the fire extinguishing member 3 includes a low melting point tube and a first fire extinguishing material provided inside the tube. The material of the tube is selected to have a corresponding melting point based on the thermal runaway temperature of the battery cell 2. The first fire extinguishing material can be a phase change material with fire extinguishing function, such as halogenated alkanes, specifically, for example, perfluorohexanone, etc. When the thermal runaway reaches the triggering temperature of the fire extinguishing member 3, the fire extinguishing member 3 bursts so as to release the first fire extinguishing material inside the fire extinguishing member 3, thereby timely cooling and extinguishing the battery cell 2 under thermal runaway.

However, in other embodiments, the fire extinguishing member 3 can also be a cooling pipe, and a coolant flows in the cooling pipe. When the temperature of the cooling pipe reaches its melting point, the cooling pipe can burst so as to release the coolant inside the cooling pipe, thereby cooling and extinguishing the battery cell 2 under thermal runaway.

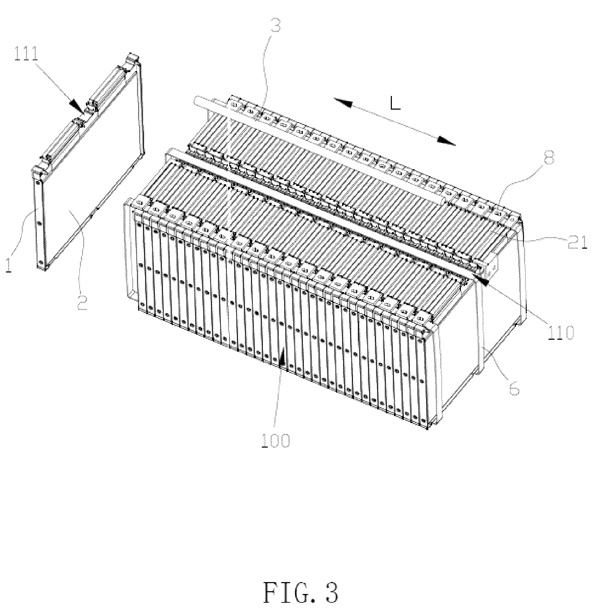

As shown in FIGS. 3, 4, and 5, in one embodiment, the plurality of the battery cells 2 are arranged along the length direction L of the battery module. The battery cell 2 is provided with a tab 21, and the fire extinguishing slot 111 is arranged on one side of the battery cell frame 1 where the tab 21 of the battery cell 2 is located, that is, the fire extinguishing member 3 is also arranged on the side where the tab 21 of the battery cell 2 is located. When the battery cell 2 experiences thermal runaway, the fire extinguishing member 3 can timely cool down and extinguish the fire at the positon where the tab 21 of the battery cell 2 is located, which is easily occurring thermal runaway, thereby improving fire extinguishing efficiency.

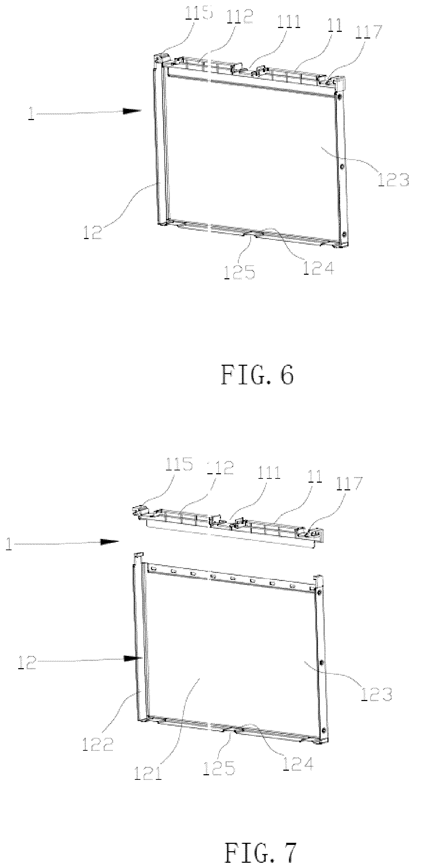

As shown in FIGS. 4 and 6, in one embodiment, the battery cell frame 1 includes a cover plate 11, and the cover plate 11 is arranged on the side of the battery cell frame 1 where the tab 21 of the battery cell 2 is located. The fire extinguishing slot 111 is provided on the cover plate 11.

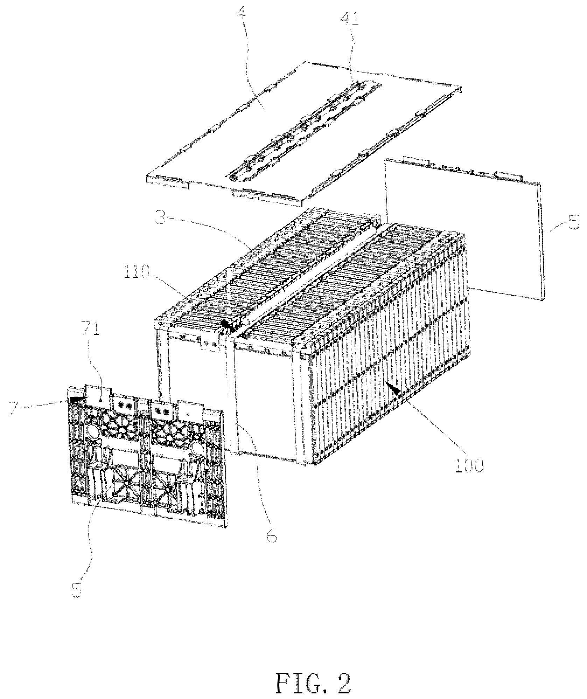

As shown in FIGS. 2 and 4, in one embodiment, the fire extinguishing slot 111 extends through the cover plate 11 along the thickness direction of the battery cell 2, thereby enabling the fire extinguishing slots 111 on the cover plates 11 of adjacent battery cell frames 1 to be communicated to each other. Meanwhile, the fire extinguishing slot 111 is a structure with an opening at its upper part, allowing the fire extinguishing member 3 to be directly installed into the fire extinguishing slots 111 from top to bottom, and avoiding the situation that the fire extinguishing member 3 needs to be inserted into the fire extinguishing slots 111 along the length direction L of the battery module if the upper part of the fire extinguishing slot 111 is closed, which will affect the installation efficiency and may cause damage or wear of the fire extinguishing member 3.

As shown in FIGS. 4 to 7, in one embodiment, the cover plate 11 is provided with a through hole 112 for the tab 21 of the battery cell 2 to pass through, and the tab 21 of the battery cell 2 extends from the inside of the battery cell frame 1 to the outside of the battery cell frame 1 via the through hole 112.

As shown in FIGS. 4 to 8, in one embodiment, the through hole 112 is a cutout (i.e., one side of the through hole 112 is an opening), which facilitates the passage of the tab 21 of the battery cell 2.

As shown in FIGS. 4 to 8, in one embodiment, the battery cell 2 is provided with two tabs 21, and the two tabs 21 are arranged on the same side of the battery cell 2 and spaced apart from each other. The cover plate 11 is arranged on the side of the battery cell frame 1 where the tabs 21 of the battery cell 2 are located. The cover plate 11 is provided with two through holes 112 corresponding to the two tabs 21, respectively. The fire extinguishing slot 111 is arranged between the two through holes 112 (that is, the fire extinguishing slot 111 is located in the middle of the cover plate 11). However, in other embodiments, the fire extinguishing slot 111 can also be set at other positions simultaneously or separately, such as the outer sides of the two through holes 112 (that is, in the length direction of the cover plate 11, the fire extinguishing slot 111 is not arranged between the two through holes 112, in other words, in the length direction of the cover plate 11, the fire extinguishing slot 111 is arranged on one side or both sides of the two through holes 112, i.e., the two ends of the cover plate 11).

As shown in FIGS. 5 to 7, in one embodiment, the battery cell frame 1 further includes a thermal conductive frame 12. The thermal conductive frame 12 is located on one side of the cover plate 11 and connected to the cover plate 11. Specifically, the thermal conductive frame 12 is located below the cover plate 11, and the top of the thermal conductive frame 12 is connected to the cover plate 11. The thermal conductive frame 12 is provided with an installation groove 123, and the battery cell 2 is installed in the installation groove 123.

Specifically, the thermal conductive frame 12 is made of a thermal conductive material, such as metal materials. The thermal conductive frame 12 can not only support and accommodate the battery cell 2, but also transfer heat, so as to quickly export the heat generated by the battery cell 2 during normal operation. Meanwhile, the thermal conductive frame 12 can also block the flow of flames or high-temperature gases between adjacent thermal conductive frames 12 after thermal runaway occurs in the battery cell 2, thereby reducing the impact of the battery cell 2 under thermal runaway on normal battery cells 2 accommodated in other thermal conductive frames 12.

In one embodiment, the cover plate 11 is made of plastic material, and the thermal conductive frame 12 is connected to the cover plate 11 using a hot melt process.

As shown in FIGS. 5 and 7, in one embodiment, the thermal conductive frame 12 includes a main body 121. The top of the main body 121 is connected to the cover plate 11, and the other three sides of the main body 121 are provided with folded edges 122. The installation groove 123 is enclosed by the main body 121 and the folded edges 122. The battery cells 2 in adjacent battery cell frames 1 are separated by the main body 121 of the thermal conductive frame 12. The folded edges 122 on adjacent battery cell frames 1 are in contact with each other, and the cover plates 11 on adjacent battery cell frames 1 are in contact with each other, thereby improving the support strength of the battery cell frames 1 and reducing defects caused by the deformation of the battery cell frames 1 during stacking.

As shown in FIGS. 6 and 7, in one embodiment, the thermal conductive frame 12 is provided with a first strap installation slot 125 for installing a strap 6.

As shown in FIGS. 4, 6, and 7, in one embodiment, the thermal conductive frame 12 is provided with a first step portion 124. The first step portion 124 is formed by recessing the bottom wall of the thermal conductive frame 12. Specifically, the first step portion 124 is set on the folded edge 122 at the bottom of the thermal conductive frame 12. The first step portion 124 can support the battery cell 2 upwards. The first strap installation slot 125 is provided on the bottom wall of the thermal conductive frame 12, and the position of the first strap installation slot 125 corresponds to the position of the first step portion 124.

As shown in FIG. 2, FIG. 4, FIG. 7, and FIG. 8, in one embodiment, the battery cell frame 1 is provided with a guiding hole 1141 at the corresponding position of the fire extinguishing slot 111. After the thermal runaway of the battery cell 2 occurs, the heat generated can enter the fire extinguishing slot 111 via the guiding hole 1141 from the battery cell frame 1, thereby enabling the fire extinguishing member 3 to quickly rise in temperature and carry out the fire extinguishing action. After the fire extinguishing member 3 is heated to burst, the first fire extinguishing material released can enter the installation groove 123 via the guiding hole 1141.

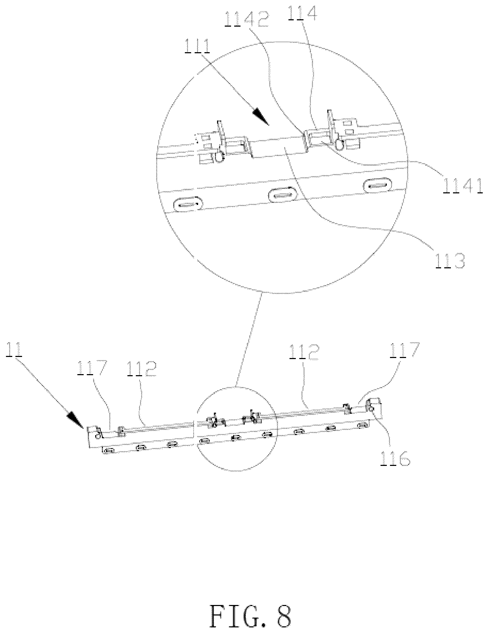

As shown in FIG. 8, in one embodiment, the guiding hole 1141 is arranged on the bottom wall of the fire extinguishing slot 111.

As shown in FIGS. 2 and 8, in one embodiment, a second strap installation slot 113 for mounting the strap 6 is provided on the bottom wall of the fire extinguishing slot 111. The second strap installation slot 113 is formed by recessing the bottom wall of the fire extinguishing slot 111, and the non-recessed part of the bottom wall of the fire extinguishing slot 111 forms a second step portion 114. The guiding hole 1141 is provided on the second step portion 114. The fire extinguishing member 3 is arranged along the second strap installation slot 113, and the fire extinguishing member 3 is located above the second strap installation slot 113. The fire extinguishing member 3 does not fully cover the guiding hole 1141, so that the heat generated by the battery cell 2 can timely enter the fire extinguishing slot 111 through the uncovered part of the guiding hole 1141.

Specifically, by setting the second strap installation slot 113 in the fire extinguishing slot 111, it is beneficial to avoid the second strap installation slot 113 occupying additional space in the width direction of the battery module (i.e., the length direction of the cover plate 11), thereby reducing the size of the battery module. Meanwhile, by setting the guiding hole 1141 on the second step portion 114, it can avoid blocking heat from entering the fire extinguishing slot 111 due to the covering of the strap 6 or fire extinguishing member 3 on the guiding hole 1141, which is beneficial for the heat to be discharged from the guiding hole 1141 to the fire extinguishing slot 111 as soon as possible in the early stage of thermal runaway, thereby delaying the development of thermal runaway.

As shown in FIG. 8, in one embodiment, the second strap installation slot 113 is located in the middle of the bottom wall of the fire extinguishing slot 111. In the length direction of the cover plate 11, the second step portion 114 is formed on both sides of the second strap installation slot 113, and the guiding hole 1141 is provided on the second step portions 114 on both sides.

As shown in FIGS. 2 and 8, in one embodiment, a side wall 1142 of the second step portion 114 near the second strap installation slot 113 has an arc-shaped or inclined structure, which facilitates the strap 6 to slide into the second strap installation slot 113 during mounting, thereby facilitating the mounting of the strap 6.

As shown in FIGS. 4 and 5, in one embodiment, multiple battery cells 2 are installed in at least some of the battery cell frames 1, and the multiple battery cells 2 are arranged sequentially within the battery cell frame 1. A heat insulation pad 13 and a tab edge sealing isolation strip 14 are provided between adjacent two battery cells 2 in the battery cell frame 1. The heat insulation pad 13 is arranged corresponding to the main portion of the battery cell 2. The tab edge sealing isolation strip 14 is located on one side of the heat insulation pad 13, and the tab edge sealing isolation strip 14 is arranged corresponding to the edge sealing position of the tab 21 of the battery cell 2.

Specifically, the heat insulation pad 13 is mainly used to block the transfer of heat between adjacent battery cells 2, and to slow down the thermal diffusion when the battery cell 2 experiences thermal runaway. Meanwhile, the heat insulation pad 13 plays a buffering role between adjacent battery cells 2 for absorbing a certain amount of cell expansion, adjusting the pressure inside the module, and thereby improving the service life of the battery cells 2. The heat insulation pad 13 can be made of single or composite materials according to needs, for example, it may be made of mica plate, foam or aerogel, and mica plate of a sandwich structure.

The tab edge sealing isolation strip 14 can isolate the sealing edge of the tabs 21 of adjacent battery cells 2. In one embodiment, a second fire extinguishing material is provided inside the tab edge sealing isolation strip 14. When the temperature of the tab edge sealing isolation strip 14 reaches its melting point, the tab edge sealing isolation strip 14 can burst so as to release the second fire extinguishing material inside the tab edge sealing isolation strip 14.

Specifically, the tab edge sealing isolation strip 14 includes a hot-melt outer shell and a second fire extinguishing material provided inside the outer shell. The material of the outer shell is selected to have a corresponding melting point based on the thermal runaway temperature of the battery cell 2. When the thermal runaway reaches the triggering temperature of the tab edge sealing isolation strip 14, the tab edge sealing isolation strip 14 bursts so as to release the second fire extinguishing material inside the tab edge sealing isolation strip 14, thereby timely cooling and extinguishing the battery cell 2 under thermal runaway. The second fire extinguishing material can be selected to be same as the first fire extinguishing material.

As shown in FIGS. 1, 7, and 8, in one embodiment, the battery cell frame 1 is provided with positioning pins 115 and positioning holes 116 on opposite sides along the length direction L of the battery module. As for adjacent two battery cell frames 1, the positioning pins 115 on one battery cell frame 1 can be inserted into the positioning holes 116 on another battery cell frame 1 to achieve connection between the adjacent two battery cell frames 1.

As shown in FIGS. 7 and 8, in one embodiment, both the positioning pins 115 and the positioning holes 116 are provided on the cover plate 11. The positioning pins 115 and the positioning holes 116 can be arranged at the middle and/or both ends of the cover plate 11. However, in other embodiments, the positioning pins 115 and the positioning holes 116 can also be set at other positions on the battery cell frame 1, for example, on the thermal conductive frame 12.

As shown in FIGS. 1 and 2, in one embodiment, the battery module further includes a protective plate 4. The protective plate 4 is arranged on one side of the battery cell assembly 100 where the fire extinguishing member 3 is located. The protective plate 4 is provided with an opening 41 at the position corresponding to the fire extinguishing member 3.

Specifically, the protective plate 4 can be made of mica plate, which mainly plays a role in flame impact resistance and thermal insulation. The opening 41 is provided on the protective plate 4. The heat generated by the battery cell 2 can be discharged through this opening 41 in the early stage of thermal runaway, so as to delay the spread of thermal runaway within the battery module and prevent explosion.

As shown in FIGS. 1 and 2, in one embodiment, the battery module further includes end plates 5 and a strap 6. The end plates 5 are arranged at opposite ends of the battery cell assembly 100 along the length direction L of the battery module. The strap 6 is arranged around the battery cell assembly 100 and the end plates 5, and the strap 6 binds the battery cell assembly 100 and the end plates 5 together.

Specifically, as shown in FIGS. 2, 7, and 8, the fire extinguishing slot 111 is located in the middle of the cover plate 11. A third strap installation slot 117 is further provided at both ends of the cover plate 11. There are three first strap installation slots 125 at the bottom of the thermal conductive frame 12, and the first strap installation slot 125 located in the middle of the thermal conductive frame 12 corresponds to the second strap installation slot 113 located in the middle of the cover plate 11, and the two first strap installation slots 125 located at both ends of the thermal conductive frame 12 correspond to the two third strap installation slots 117 located at both ends of the cover plate 11. The number of the strap 6 is three, wherein one strap 6 is installed in the second strap installation slot 113 of the cover plate 11 and the first strap installation slot 125 in the middle of the thermal conductive frame 12, with the fire extinguishing member 3 being arranged on the strap 6, and the other two straps 6 are installed in the two third strap installation slots 117 at both ends of the cover plate 11 and the two first strap installation slots 125 at both ends of the thermal conductive frame 12, respectively, to firmly fix the battery cell assembly 100 and the end plates 5 together.

In one embodiment, in the length direction of the cover plate 11, the fire extinguishing slot 111 can also be arranged on the outer side of the two through holes 112, namely the two ends of the cover plate 11. In the length direction of the cover plate 11, there may be no third strap installation slot 117 provided between the two through holes 112 or on the outer side of the two through holes 112 at the location where the fire extinguishing slot 111 is provided.

In another embodiment, the battery cell 2 is provided with two tabs 21 located on opposite sides (that is, the two tabs 21 on the battery cell 2 are respectively arranged at opposite sides of the battery cell 2). The battery cell frame 1 includes two cover plates 11, the two cover plates 11 are respectively arranged on the opposite sides of the battery cell 2, and the two cover plates 11 correspond to the two tabs 21 of the battery cell 2, respectively. In this case, the two cover plates 11 are respectively arranged on opposite sides of the main body 121 of the thermal conductive frame 12, and the other two sides of the main body 121 are provided with the folded edges 122. Furthermore, each cover plate 11 is provided with a through hole 112, the through hole 112 is located in the middle of the cover plate 11, and the fire extinguishing slot 111 is arranged on one side or opposite two sides of the through hole 112 along the length direction of the cover plate 11. Meanwhile, if there is no fire extinguishing slot 111 on any one side of the through hole 112 along the length direction of the cover plate 11, a third strap installation slot 117 is provided on that side.

In one embodiment, the battery module further includes an insulation shield (not shown) provided between the battery cell assembly 100 and the protective plate 4, and a signal acquisition board (not shown) provided between the insulation shield and the protective plate 4. The signal acquisition board extends along the length direction L of the battery module, and there is a notch (not shown) provided on an extension end of the signal acquisition board. The end plate 5 is provided with an insulation seat 7, and the insulation seat 7 is provided with a protrusion 71 matching with the notch on the signal acquisition board, so that the notch of the signal acquisition board is engaged with the protrusion 71, thereby fixing the extended end of the signal acquisition board on the insulation seat 7.

As shown in FIGS. 3, 6, 9, and 10, in one embodiment, the battery module further includes a busbar 8, the busbar 8 is arranged on one side of the cover plate 11 away from the battery cell 2, and the busbar 8 is disposed between the battery cell assembly 100 and the insulation shield. The busbar 8 is provided with a slit 81 for the tab 21 of the battery cell 2 to pass out. Specifically, the tab 21 of the battery cell 2 passes through the through hole 112 and the slit 81 in sequence and is electrically connected to the busbar 8.

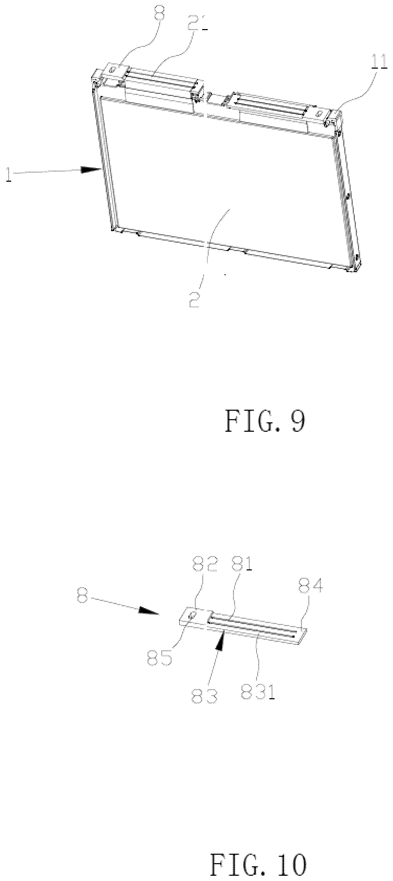

As shown in FIGS. 9 and 10, in one embodiment, after the tab 21 of the battery cell 2 passes through the slit 81 on the busbar 8, the tab 21 is bent to be in contact with the surface of one side of the busbar 8 away from the battery cell 2. Then, the tab 21 is welded and fixed to the busbar 8.

As shown in FIG. 10, in one embodiment, the busbar 8 includes a first connecting part 82, a second connecting part 84, and a grid part 83 located between the first connecting part 82 and the second connecting part 84. The grid part 83 includes multiple guiding bars 831, and the multiple guiding bars 831 are spaced apart from each other along the length direction L of the battery module. The opposite ends of each guiding bar 831 are respectively connected to the first connecting part 82 and the second connecting part 84. The slit 81 is formed between two adjacent guiding bars 831.

As shown in FIGS. 9 and 10, in one embodiment, the thickness of the grid part 83 is smaller than the thickness of the first connecting part 82. A step is formed at the junction of the grid part 83 and the first connecting part 82, so that the surface of the tab 21 can be basically kept flush with the surface of the first connecting part 82 after the tab 21 is bent, without being protruded from the surface of the busbar 8. Further, the thickness of the second connecting part 84 is the same as the thickness of the grid part 83. However, in other embodiments, the thickness of the second connecting part 84 can also be the same as the thickness of the first connecting part 82.

As shown in FIGS. 3, 9, and 10, in one embodiment, the busbar 8 is provided with multiple slits 81, and the multiple slits are arranged sequentially along the length direction L of the battery module. Each busbar 8 corresponds to a battery cell frame 1, and the multiple slits 81 on each busbar 8 are used to lead out the tabs 21 of multiple battery cells 2 within the battery cell frame 1.

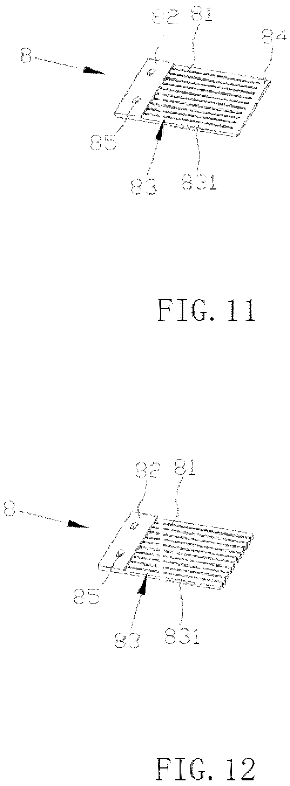

As shown in FIG. 11 and FIG. 3, in another embodiment, the busbar 8 is provided with multiple slits 81, and the multiple slits 81 are arranged sequentially along the length direction L of the battery module. Each busbar 8 corresponds to multiple battery cell frames 1, and the multiple slits 81 on each busbar 8 are used to simultaneously lead out the tabs 21 of the battery cells 2 within the multiple battery cell frames 1.

As shown in FIG. 12 and FIG. 3, in another embodiment, the busbar 8 includes a first connecting part 82 and a grid part 83 located on one side of the first connecting part 82 (that is, without a second connecting part 84). The grid part 83 includes multiple guiding bars 831, and the multiple guiding bars 831 are spaced apart from each other along the length direction L of the battery module. One end of each guiding bar 831 is connected to the first connecting part 82, and the other end of each guiding bar 831 away from the first connecting part 82 is a free end and is rounded. The slit 81 is formed between adjacent two guiding bars 831.

As shown in FIG. 10, in one embodiment, the busbar 8 is provided with a positioning groove 85 for positioning purpose. The positioning groove 85 is arranged on the first connecting part 82. The positioning groove 85 is used for positioning a tab bending device (not shown) so as to bend the tab 21.

**In** one embodiment, the inner wall of one side of the slit 81 near the cover plate 11 is an externally expanded inclined structure (that is, the slit 81 is a trapezoidal structure on the side near the cover plate 11) to facilitate the insertion of the tab 21 into the slit 81.

The battery module in the embodiments of the present application is provided with a fire extinguishing slot 111 on the outer wall of the battery cell frame 1, and the fire extinguishing slots 111 on multiple battery cell frames 1 are communicated to each other to form a fire extinguishing channel 110. A fire extinguishing member 3 is arranged in the fire extinguishing channel 110, thereby reducing the impact of the installation of the fire extinguishing member 3 on the external size of the battery module and improving the structural compactness of the battery module. Also, the installation of the fire extinguishing member 3 in the fire extinguishing channel 110 can protect the fire extinguishing member 3 from being compressed and damaged. Further, since the fire extinguishing channel 110 is composed of a plurality of fire extinguishing slots 111 communicated to each other on the battery cell frames 1, when a battery cell 2 in one position of the battery cell assembly 100 catches fire, the fire extinguishing member 3 can respond in a timely manner to extinguish the fire. That is, the fire extinguishing range of the fire extinguishing member 3 can cover the entire battery cell assembly 100, so the utilization rate of the fire extinguishing member 3 is high and the fire extinguishing efficiency is high. Moreover, during assembly, the fire extinguishing member 3 only needs to be arranged in the fire extinguishing channel 110 at one time, without the need to provide the fire extinguishing member 3 for each battery cell frame 1 separately and individually, which is conducive to improving the assembly efficiency of the battery module. Thus, the battery module is not only compact in structure and easy to assemble, and has high fire extinguishing efficiency.

The above are merely specific embodiments of the present invention, but are not intended to limit the protection scope of the present invention. The scope of the invention is defined by the appended claims.

## Claims

1. A battery module comprising a battery cell assembly (100) and a fire extinguishing member (3), wherein the battery cell assembly (100) comprises a plurality of battery cell frames (1) and a plurality of battery cells (2), the plurality of the battery cell frames (1) are arranged sequentially along a length direction (L) of the battery module, at least one battery cell (2) is provided in at least some of the battery cell frames (1); each battery cell frame (1) is provided with a fire extinguishing slot (111), and the fire extinguishing slots (111) on the plurality of the battery cell frames (1) are communicated to each other to form a fire extinguishing channel (110), the fire extinguishing member (3) is arranged in the fire extinguishing channel (110); the fire extinguishing slot (111) extends along the length direction (L) of the battery module, and the fire extinguishing slot (111) extends through each battery cell frame (1), the fire extinguishing channel (110) extends along the length direction (L) of the battery module, and the fire extinguishing member (3) extends along the length direction (L) of the battery module in the fire extinguishing channel (110);
**characterized in that**
a first fire extinguishing material is provided inside the fire extinguishing member (3), when a temperature of the fire extinguishing member (3) reaches its melting point, the fire extinguishing member (3) bursts so as to release the first fire extinguishing material inside the fire extinguishing member (3).

2. The battery module as claimed in claim **1,** wherein each battery cell (2) is provided with a tab (21), and the fire extinguishing slot (111) is arranged on one side of each battery cell frame (1) where the tab (21) of each battery cell (2) is located.

3. The battery module as claimed in claim **2,** wherein each battery cell frame (1) includes a cover plate (11), the cover plate (11) is arranged on the side of each battery cell frame (1) where the tab (21) of each battery cell (2) is located, and the fire extinguishing slot (111) is provided on the cover plate (11).

4. The battery module as claimed in claim **3,** wherein the cover plate (11) is provided with a through hole (112) for the tab (21) of each battery cell (2) to pass out.

5. The battery module as claimed in claim **4,** wherein each battery cell (2) is provided with two tabs (21) located on the same side, and the two tabs (21) are spaced apart from each other; the cover plate (11) is arranged on the side of each battery cell frame (1) where the tabs (21) of each battery cell (2) are located, and there are two through holes (112) on the cover plate (11), the two through holes (112) correspond to the two tabs (21), respectively, and the fire extinguishing slot (111) is arranged between the two through holes (112), and/or the fire extinguishing slot (111) is arranged on an outer side of the two through holes (112).

6. The battery module as claimed in claim **5,** wherein each battery cell frame (1) further comprises a thermal conductive frame (12) connected to the cover plate (11), the thermal conductive frame (12) is provided with an installation groove (123), and the battery cell (2) is installed in the installation groove (123).

7. The battery module as claimed in claim **6,** wherein the thermal conductive frame (12) is provided with a first strap installation slot (125) for installing a strap (6).

8. The battery module as claimed in claim **4,** wherein each battery cell (2) is provided with two tabs (21) located on opposite sides, each battery cell frame (1) comprises two cover plates (11), the two cover plates (11) are respectively arranged on the opposite sides of each battery cell (2), and the two cover plates (11) correspond to the two tabs (21) of the battery cell (2), respectively, wherein each cover plate (11) is provided with one through hole (112), and the fire extinguishing slot (111) is arranged on one side or opposite two sides of the through hole (112).

9. The battery module as claimed in claim **4,** wherein the battery module further comprises a busbar (8), the busbar (8) is arranged on one side of the cover plate (11) away from each battery cell (2), and the busbar (8) is provided with a slit (81) for the tab (21) of each battery cell (2) to pass out, the tab (21) of each battery cell (2) passes through the through hole (112) and the slit (81) in sequence and is electrically connected to the busbar (8).

10. The battery module as claimed in claim 7, wherein a second strap installation slot (113) for installing the strap (6) is provided on a bottom wall of the fire extinguishing slot (111).

11. The battery module as claimed in claim **10,** wherein each battery cell frame (1) is provided with a guiding hole (1141) at a position corresponding to the fire extinguishing slot (111), and heat generated by each battery cell (2) after thermal runaway enters into the fire extinguishing slot (111) via the guiding hole (1141).

12. The battery module as claimed in claim **11,** wherein the second strap installation slot (113) is formed by recessing the bottom wall of the fire extinguishing slot (111), the non-recessed part of the bottom wall of the fire extinguishing slot (111) forms a second step portion (114), and the guiding hole (1141) is provided on the second step portion (114), the fire extinguishing member (3) is arranged along the second strap installation slot (113), and the fire extinguishing member (3) does not fully cover the guiding hole (1141).

13. The battery module as claimed in claim **1,** wherein the battery module further comprises a protective plate (4), the protective plate (4) is arranged on one side of the battery cell assembly (100) where the fire extinguishing member (3) is located; the protective plate (4) is provided with an opening (41) at a position corresponding to the fire extinguishing member (3).

14. The battery module as claimed in any one of claims **1** to **13,** wherein the fire extinguishing member (3) is an elongated strip structure, and the fire extinguishing member (3) extends from one end of the fire extinguishing channel (110) to the opposite end of the fire extinguishing channel (110).

## Patentansprüche

1. Batteriemodul, umfassend eine Batteriezellenanordnung (100) und ein Löschmittelelement (3), wobei die Batteriezellenanordnung (100) mehrere Batteriezellenrahmen (1) und mehrere Batteriezellen (2) umfasst, wobei die mehreren Batteriezellenrahmen (1) entlang einer Längenrichtung (L) des Batteriemoduls hintereinander angeordnet sind, wobei in mindestens einigen der Batteriezellenrahmen (1) mindestens eine Batteriezelle (2) angeordnet ist, wobei jeder Batteriezellenrahmen (1) mit einem Löschmittelschlitz (111) versehen ist, wobei die Löschmittelschlitze (111) auf den mehreren Batteriezellenrahmen (1) miteinander kommunizieren, um einen Löschmittelkanal (110) zu bilden, wobei das Löschmittelelement (3) im Löschmittelkanal (110) angeordnet ist, wobei der Löschmittelschlitz (111) sich entlang der Längenrichtung (L) des Batteriemoduls erstreckt, wobei der Löschmittelschlitz (111) durch jeden Batteriezellenrahmen (1) verläuft , wobei der Löschmittelkanal (110) sich entlang der Längenrichtung (L) des Batteriemoduls erstreckt, und wobei das Löschmittelelement (3) sich entlang der Längenrichtung (L) des Batteriemoduls im Löschmittelkanal (110) erstreckt,
**dadurch gekennzeichnet, dass** im Inneren des Löschmittelelements (3) ein erstes Löschmittel vorgesehen ist, wobei wenn eine Temperatur des Löschmittelelements (3) dessen Schmelzpunkt erreicht, das Löschmittelelement (3) aufbricht, sodass das erste Löschmittel im Inneren des Löschmittelelements (3) freigesetzt wird.

2. Batteriemodul nach Anspruch 1, wobei jede Batteriezelle (2) mit einem Kontaktfahne (21) versehen ist und der Löschmittelschlitz (111) an einer Seite jedes Batteriezellenrahmens (1) angeordnet ist, an der sich die Kontaktfahne (21) jeder Batteriezelle (2) befindet.

3. Batteriemodul nach Anspruch 2, wobei jeder Batteriezellenrahmen (1) eine Abdeckplatte (11) enthält, wobei die Abdeckplatte (11) an der Seite jedes Batteriezellenrahmens (1) angeordnet ist, an der sich die Kontaktfahne (21) jeder Batteriezelle (2) befindet, wobei der Löschmittelschlitz (111) auf der Abdeckplatte (11) vorgesehen ist.

4. Batteriemodul nach Anspruch 3, wobei die Abdeckplatte (11) mit einer Durchgangsöffnung (112) versehen ist, durch die die Kontaktfahne (21) jeder Batteriezelle (2) hindurchgeführt werden kann.

5. Batteriemodul nach Anspruch 4, wobei jede Batteriezelle (2) mit zwei Kontaktfahnen (21) versehen ist, die sich auf derselben Seite befinden, wobei die beiden Kontaktfahnen (21) voneinander beabstandet sind, wobei die Abdeckplatte (11) an der Seite jedes Batteriezellenrahmens (1) angeordnet ist, an der sich die Kontaktfahnen (21) jeder Batteriezelle (2) befinden, wobei auf der Abdeckplatte (11) zwei Durchgangsöffnungen (112) vorgesehen sind, wobei die beiden Durchgangsöffnungen (112) jeweils den beiden Kontaktfahnen (21) entsprechen, wobei der Löschmittelschlitz (111) zwischen den beiden Durchgangsöffnungen (112) und/oder der Löschmittelschlitz (111) auf einer Außenseite der beiden Durchgangsöffnungen (112) angeordnet ist.

6. Batteriemodul nach Anspruch 5, wobei jeder Batteriezellenrahmen (1) ferner einen wärmeleitenden Rahmen (12) umfasst, der mit der Abdeckplatte (11) verbunden ist, wobei der wärmeleitende Rahmen (12) mit einer Einbaunut (123) versehen ist und die Batteriezelle (2) in der Einbaunut (123) installiert ist.

7. Batteriemodul nach Anspruch 6, wobei der wärmeleitende Rahmen (12) mit einem ersten Gurteinbauschlitz (125) zum Installieren eines Gurtes (6) versehen ist.

8. Batteriemodul nach Anspruch 4, wobei jede Batteriezelle (2) mit zwei Kontaktfahnen (21) versehen ist, die sich auf gegenüberliegenden Seiten befinden, wobei jeder Batteriezellenrahmen (1) zwei Abdeckplatten (11) umfasst, wobei die beiden Abdeckplatten (11) jeweils an den gegenüberliegenden Seiten jeder Batteriezelle (2) angeordnet sind und die beiden Abdeckplatten (11) jeweils den beiden Kontaktfahnen (21) der Batteriezelle (2) entsprechen, wobei jede Abdeckplatte (11) mit einer Durchgangsöffnung (112) versehen ist und der Löschmittelschlitz (111) an einer Seite oder an zwei gegenüberliegenden Seiten der Durchgangsöffnung (112) angeordnet ist.

9. Batteriemodul nach Anspruch 4, wobei das Batteriemodul ferner eine Sammelschiene (8) umfasst, wobei die Sammelschiene (8) an einer Seite der Abdeckplatte (11) angeordnet ist, die von jeder Batteriezelle (2) abgewandt ist, wobei die Sammelschiene (8) mit einem Schlitz (81) versehen ist, durch den die Kontaktfahne (21) jeder Batteriezelle (2) hindurchgeführt werden kann, wobei die Kontaktfahne (21) jeder Batteriezelle (2) nacheinander durch die Durchgangsöffnung (112) und den Schlitz (81) geführt wird und elektrisch mit der Sammelschiene (8) verbunden ist.

10. Batteriemodul nach Anspruch 7, wobei auf einer Bodenwand des Löschmittelschlitzes (111) ein zweiter Gurteinbauschlitz (113) zum Installieren des Gurtes (6) vorgesehen ist.

11. Batteriemodul nach Anspruch 10, wobei jeder Batteriezellenrahmen (1) an einer Position, die dem Löschmittelschlitz (111) entspricht, mit einer Führungsöffnung (1141) versehen ist, wobei die durch thermisches Durchgehen jeder Batteriezelle (2) erzeugte Wärme über die Führungsöffnung (1141) in den Löschmittelschlitz (111) gelangt.

12. Batteriemodul nach Anspruch 11, wobei der zweite Gurteinbauschlitz (113) durch eine Vertiefung der Bodenwand des Löschmittelschlitzes (111) gebildet ist, wobei der nicht vertiefte Teil der Bodenwand des Löschmittelschlitzes (111) einen zweiten Absatzabschnitt (114) bildet und die Führungsöffnung (1141) auf dem zweiten Absatzabschnitt (114) vorgesehen ist, wobei das Löschmittelelement (3) entlang des zweiten Gurteinbauschlitzes (113) angeordnet ist und das Löschmittelelement (3) die Führungsöffnung (1141) nicht vollständig abdeckt.

13. Batteriemodul nach Anspruch 1, wobei das Batteriemodul ferner eine Schutzplatte (4) umfasst, wobei die Schutzplatte (4) an einer Seite der Batteriezellenanordnung (100) angeordnet ist, an der sich das Löschmittelelement (3) befindet, wobei die Schutzplatte (4) an einer Position, die dem Löschmittelelement (3) entspricht, mit einer Öffnung (41) versehen ist.

14. Batteriemodul nach einem der Ansprüche 1 bis 13, wobei das Löschmittelelement (3) eine längliche Streifenstruktur ist und das Löschmittelelement (3) sich von einem Ende des Löschmittelkanals (110) bis zum gegenüberliegenden Ende des Löschmittelkanals (110) erstreckt.

## Revendications

1. Module de batterie comprenant un ensemble élément de batterie (100) et un élément d'extinction d'incendie (3), dans lequel l'ensemble élément de batterie (100) comprend une pluralité de cadres d'élément de batterie (1) et une pluralité d'éléments de batterie (2), la pluralité de cadres d'élément de batterie (1) sont disposés séquentiellement le long d'une direction de longueur (L) du module de batterie, au moins un élément de batterie (2) est prévu dans au moins certains des cadres d'élément de batterie (1) ; chaque cadre d'élément de batterie (1) est pourvu d'une fente d'extinction d'incendie (111), et les fentes d'extinction d'incendie (111) sur la pluralité de cadres d'élément de batterie (1) sont en communication les unes avec les autres afin de former un canal d'extinction d'incendie (110), l'élément d'extinction d'incendie (3) est disposé dans le canal d'extinction d'incendie (110) ; la fente d'extinction d'incendie (111) s'étend le long de la direction de longueur (L) du module de batterie, et la fente d'extinction d'incendie (111) s'étend à travers chaque cadre d'élément de batterie (1), le canal d'extinction d'incendie (110) s'étend le long de la direction de longueur (L) du module de batterie, et l'élément d'extinction d'incendie (3) s'étend le long de la direction de longueur (L) du module de batterie dans le canal d'extinction d'incendie (110) ;
**caractérisé en ce qu'**un premier matériau d'extinction d'incendie est prévu à l'intérieur de l'élément d'extinction d'incendie (3), lorsqu'une température de l'élément d'extinction d'incendie (3) atteint son point de fusion, l'élément d'extinction d'incendie (3) éclate afin de libérer le premier matériau d'extinction d'incendie contenu à l'intérieur de l'élément d'extinction d'incendie (3).

2. Module de batterie selon la revendication 1, dans lequel chaque élément de batterie (2) est pourvu d'une languette (21), et la fente d'extinction d'incendie (111) est disposée sur un côté de chaque cadre d'élément de batterie (1) où se situe la languette (21) de chaque élément de batterie (2).

3. Module de batterie selon la revendication 2, dans lequel chaque cadre d'élément de batterie (1) comporte une plaque de couvercle (11), la plaque de couvercle (11) est disposée sur le côté de chaque cadre d'élément de batterie (1) où se situe la languette (21) de chaque élément de batterie (2), et la fente d'extinction d'incendie (111) est prévue sur la plaque de couvercle (11).

4. Module de batterie selon la revendication 3, dans lequel la plaque de couvercle (11) est pourvue d'un trou traversant (112) permettant le passage de la languette (21) de chaque élément de batterie (2).

5. Module de batterie selon la revendication 4, dans lequel chaque élément de batterie (2) est pourvu de deux languettes (21) situées sur le même côté, et les deux languettes (21) sont espacées l'une de l'autre ; la plaque de couvercle (11) est disposée sur le côté de chaque cadre d'élément de batterie (1) où se situent les languettes (21) de chaque élément de batterie (2), et il y a deux trous traversants (112) sur la plaque de couvercle (11), les deux trous traversants (112) correspondent respectivement aux deux languettes (21), la fente d'extinction d'incendie (111) est disposée entre les deux trous traversants (112), et/ou la fente d'extinction d'incendie (111) est disposée sur un côté externe des deux trous traversants (112).

6. Module de batterie selon la revendication 5, dans lequel chaque cadre d'élément de batterie (1) comprend en outre un cadre conducteur thermique (12) relié à la plaque de couvercle (11), le cadre conducteur thermique (12) est pourvu d'une rainure d'installation (123), et l'élément de batterie (2) est installé dans la rainure d'installation (123).

7. Module de batterie selon la revendication 6, dans lequel le cadre conducteur thermique (12) est pourvu d'une première rainure d'installation de barrette (125) destinée à installer une barrette (6).

8. Module de batterie selon la revendication 4, dans lequel chaque élément de batterie (2) est pourvu de deux languettes (21) situées sur des côtés opposés, chaque cadre d'élément de batterie (1) comprend deux plaques de couvercle (11), les deux plaques de couvercle (11) sont respectivement disposées sur les côtés opposés de chaque élément de batterie (2), et les deux plaques de couvercle (11) correspondent aux deux languettes (21) de l'élément de batterie (2), respectivement, dans lequel chaque plaque de couvercle (11) est pourvue d'un trou traversant (112), et la fente d'extinction d'incendie (111) est disposée sur un côté ou sur deux côtés opposés du trou traversant (112).

9. Module de batterie selon la revendication 4, dans lequel le module de batterie comprend en outre une barre omnibus (8), la barre omnibus (8) est disposée sur un côté de la plaque de couvercle (11) opposé à chaque élément de batterie (2), et la barre omnibus (8) est pourvue d'une fente (81) permettant le passage de la languette (21) de chaque élément de batterie (2), la languette (21) de chaque élément de batterie (2) passe séquentiellement à travers le trou traversant (112) et la fente (81) et est électriquement connectée à la barre omnibus (8).

10. Module de batterie selon la revendication 7, dans lequel une seconde rainure d'installation de barrette (113) destinée à installer la barrette (6) est prévue sur une paroi inférieure de la fente d'extinction d'incendie (111).

11. Module de batterie selon la revendication 10, dans lequel chaque cadre d'élément de batterie (1) est pourvu d'un trou de guidage (1141) au niveau d'une position correspondant à la fente d'extinction d'incendie (111), et de la chaleur générée par chaque élément de batterie (2) après l'emballement thermique pénètre dans la fente d'extinction d'incendie (111) par le trou de guidage (1141).

12. Module de batterie selon la revendication 11, dans lequel la seconde rainure d'installation de barrette (113) est formée par un évidement de la paroi inférieure de la fente d'extinction d'incendie (111), la partie non évidée de la paroi inférieure de la fente d'extinction d'incendie (111) forme une seconde partie étagée (114), et le trou de guidage (1141) est prévu sur la seconde partie étagée (114), l'élément d'extinction d'incendie (3) est disposé le long de la seconde rainure d'installation de barrette (113), et l'élément d'extinction d'incendie (3) ne recouvre pas complètement le trou de guidage (1141).

13. Module de batterie selon la revendication 1, dans lequel le module de batterie comprend en outre une plaque de protection (4), la plaque de protection (4) est disposée sur un côté de l'ensemble élément de batterie (100) où se situe l'élément d'extinction d'incendie (3) ; la plaque de protection (4) est pourvue d'une ouverture (41) au niveau d'une position correspondant à l'élément d'extinction d'incendie (3).

14. Module de batterie selon l'une quelconque des revendications 1 à 13, dans lequel l'élément d'extinction d'incendie (3) est une structure en bande allongée, et l'élément d'extinction d'incendie (3) s'étend d'une extrémité du canal d'extinction d'incendie (110) vers l'extrémité opposée du canal d'extinction d'incendie (110).
